# EUROPEAN PATENT APPLICATION

(11) **EP 4 046 972 A1**
(43) Date of publication of application: **24.08.2022**
(21) Application number: 20877769.8
(22) Date of filing: 09.10.2020
(51) Int. Cl.: C03C 17/38, E06B 9/24, G02B 1/18, G02B 5/08

(54) **GLASS BODY**

(30) Priority: 17.10.2019 JP 2019190615
(71) Applicant: NIPPON SHEET GLASS COMPANY, LIMITED, Tokyo 108-6321 (JP)
(72) Inventor: TSURI, Keiko, Tokyo 108-6321 (JP); OYA, Kazuaki, Tokyo 108-6321 (JP); YABUTA, Takeshi, Tokyo 108-6321 (JP)
(74) Representative: Mewburn Ellis LLP
(86) International application number: PCT/JP2020/038233
(87) International publication number: WO 2021/075359

(57) **Abstract**

A glass body according to the present invention includes a glass plate having a first surface and a second surface on a side opposite to the first surface, a translucent reflective film arranged on the first surface of the glass plate, and an antifog means arranged on one of the translucent reflective film and the second surface of the glass plate.

## Description

### Technical Field

The present invention relates to a glass body.

### Background Art

Patent Literature 1 discloses a glass body that is known as a half mirror. This glass body is formed by providing a covering layer containing an inorganic oxide on a glass plate, and its visible light transmittance and visible light reflectance are adjusted. That is, the glass body reflects an image in the manner of a mirror when viewed from one side of the glass body, whereas the glass body transmits light from a certain image located on the other side of the glass body, and this image can be seen from the one side thereof.

### Citation List

### Patent Literature

Patent Literature 1: JP 2008-502803A

### Summary of Invention

### Technical Problem

The half mirror as mentioned above has been used in various applications, and the range of applications thereof is also expanding. For example, it is conceivable that the half mirror is used as a glass body for separating an indoor area and an outdoor area. In this case, the surface of the glass body may fog up due to a difference between the indoor temperature and the outdoor temperature, and suppression of fogging or removal of the fog becomes a problem. The present invention was made in order to solve the aforementioned problems, and it is an object thereof to provide a glass body that is capable of functioning as a half mirror and suppressing fogging.

### Solution to Problem

1. A glass body including: a glass plate having a first surface and a second surface on a side opposite to the first surface;
   a translucent reflective film arranged on the first surface of the glass plate; and
   an antifog means arranged on at least one of the translucent reflective film and the second surface of the glass plate.
2. The glass body according to item 1, wherein the antifog means includes an antifog film, and
   the antifog film is provided on the second surface of the glass plate.
3. The glass body according to item 2, wherein the translucent reflective film has a surface roughness Ra of 15 nm or less.
4. The glass body according to item 3, wherein the glass plate is made of float glass, and
   a tin oxide concentration at the first surface is lower than a tin oxide concentration at the second surface.
5. The glass body according to item 1, wherein the antifog means includes an antifog film, and
   the antifog film is provided on the translucent reflective film.
6. The glass body according to item 5, wherein the translucent reflective film is formed by layering a plurality of layers, and a difference in a refractive index between the antifog film and the outermost layer of the translucent reflective film that is adjacent to the antifog film is 0.1 or less.
7. The glass body according to item 6, wherein the antifog film has a refractive index of 1.6 or less.
8. The glass body according to any one of items 5 to 7, wherein a difference in an optical thickness of the antifog film is 150 nm or more, and
   the antifog film has a thickness of 10 µm or more.
9. The glass body according to item 5 or 6, wherein the antifog means includes:
   the antifog film;
   a film substrate that supports the antifog film and has a thickness of 10 µm or more; and
   an adhesive layer that is arranged on a surface of the film substrate on a side opposite to the antifog film and is used to fix the film substrate to the translucent reflective film.
10. The glass body according to any one of items 1 to 9, wherein a haze ratio is 2% or less.
11. The glass body according to any one of items 1 to 10, wherein the antifog means includes an antifog film containing a water absorbent resin.
12. The glass body according to item 11, wherein the antifog film has a thickness of 5 µm or more.
13. The glass body according to any one of items 1 to 12, wherein visible light transmittance is 20% or more and 70% or less.
14. The glass body according to any one of items 1 to 13, wherein, when a reflected color tone on the translucent reflective film side is represented using the L*a*b* color system, a value of a* is -15 to 15, and
   when a reflected color tone on the translucent reflective film side is represented using the L*a*b* color system, a value of b* is -15 to 15.
15. The glass body according to any one of items 1 to 14, wherein thermal conductivity of the translucent reflective film is larger than that of the glass plate.
16. The glass body according to any one of items 1 to 15, wherein the translucent reflective film is formed by layering a plurality of layers, and
   at least one of the plurality of layers is a metal reflective layer made of a metal or semimetal.
17. The glass body according to item 16, wherein the metal reflective layer contains at least one of Si, Ag, Al, Cr, Ti, and Mo as a main component.
18. The glass body according to item 16 or 17, wherein the outermost layer of the translucent reflective film has a refractive index of 1.5 or less for a visible light region.
19. The glass body according to item 18, wherein the outermost layer contains SiO₂ as a main component.
20. The glass body according to item 19, wherein the antifog means includes an antifog film, and
   the antifog film is provided on the translucent reflective film.
21. The glass body according to any one of items 1 to 20, wherein the antifog means includes an antifog film, and
   the antifog film has a water repellent surface.
22. The glass body according to item 21, wherein a water contact angle on the surface of the antifog film is 70° or more.
23. The glass body according to any one of items 1 to 9, wherein the antifog means is arranged on the translucent reflective film and the second surface of the glass plate.
24. The glass body according to any one of items 1 to 23, further including a light-shielding film formed on at least one of the antifog means and the translucent reflective film.

### Advantageous Effects of the Invention

The glass body of the present invention is capable of functioning as a half mirror and suppressing fogging.

### Brief Description of Drawings

FIG. 1 is a plan view showing an embodiment of a glass body according to the present invention.
FIG. 2 is a cross-sectional view taken along line A-A in FIG. 1.
FIG. 3 is a plan view showing an example of the environment in which the glass body shown in FIG. 1 is used.
FIG. 4 is a cross-sectional view showing another example of the glass body according to the present invention.
FIG. 5 is a plan view showing another example of the glass body according to the present invention.
FIG. 6 is a cross-sectional view taken along line B-B in FIG. 5.

### Description of Embodiments

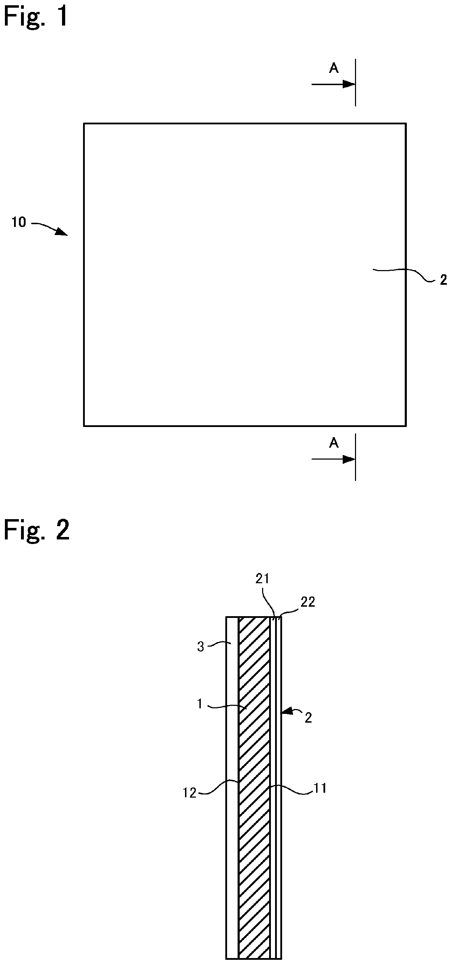

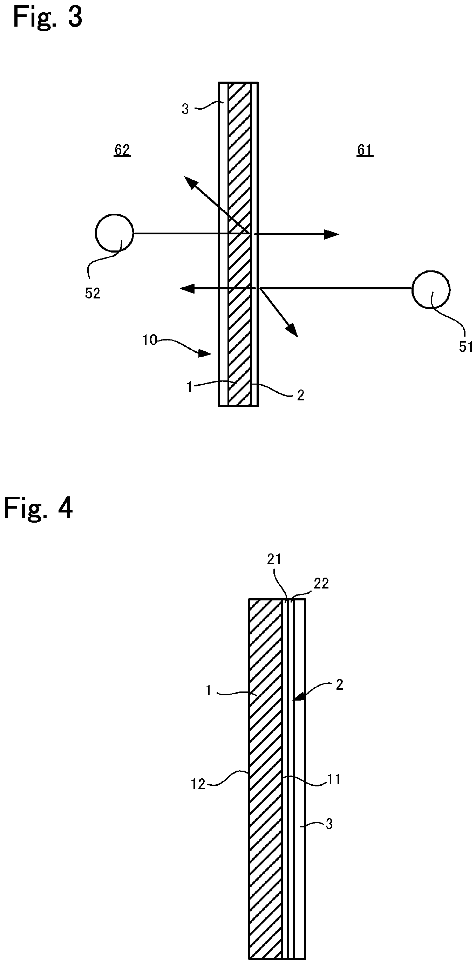

Hereinafter, an embodiment of a glass body according to the present invention will be described with reference to the drawings. FIG. 1 is a plan view of the glass body, FIG. 2 is a cross-sectional view taken along line A-A in FIG. 1, and FIG. 3 is a plan view showing an example of the environment in which this glass body is used.

### 1. Overview of Glass Body

As shown in FIGS. 1 and 2, a glass body 10 includes a glass plate 1 having two principal surfaces, namely a first surface 11 and a second surface 12, a translucent reflective film 2 layered on the first surface 11, and an antifog film 3 layered on the second surface 12. The translucent reflective film 2 adjusts the visible light transmittance and the visible light reflectance of the glass body 10, and thus the glass body 10 forms what is known as a half mirror. For example, in the case where a first zone 61 and a second zone 62 are formed with the glass body 10 being located therebetween as shown in FIG. 3, the surface of the glass body 10 reflects light from a first image 51 located in the first zone 61, and thus the first image 51 appears on the glass body 10. On the other hand, the glass body 10 transmits light from a second image 52 located in the second zone 62, and thus the second image 52 in the second zone 62 can be visually confirmed from the first zone 61. Hereinafter, these constituent elements will be described.

### 1-1. Glass Plate

There is no particular limitation on the glass plate 1, and a known glass plate can be used. Examples thereof include various glass plates made of float glass, heat-ray absorbing glass, clear glass, green glass, UV green glass, soda-lime glass, and the like. The thickness of the glass plate 1 is not particularly limited, but is preferably, for example, 0.5 to 10 mm, and more preferably 0.7 to 8 mm. The thickness of the glass plate 1 affects the above-described visible light transmittance and visible light reflectance, and can be therefore changed as appropriate in accordance with required reflectance and transmittance.

Here, a case will be described in which the glass plate 1 is made of float glass. Float glass is manufactured using a float method. It is well known that, in a glass plate made of float glass, the concentrations of tin oxide at the two principal surfaces thereof are different due to the float glass manufacturing method. That is, in the float method, a flat glass plate is manufactured by allowing molten glass to flow on the surface of molten tin. At this time, a tin oxide-containing layer exists on a surface of the glass plate that has come into contact with the molten tin. In general, in such a glass plate, a surface on which this tin oxide-containing layer exists is referred to as a "bottom surface", and a surface that is located on a side opposite to the bottom surface and has not come into contact with tin is referred to as a "top surface". The content of tin oxide at the bottom surface is larger than the content of tin oxide at the top surface as described later. Here, "the content of tin oxide" is defined as the maximum value of the concentration of tin oxide in terms of tin dioxide in a region ranging from the glass surface to a depth of 10 µm. Specifically, the content of tin oxide can be determined based on the value obtained through measurement using a wavelength dispersive X-ray detector (WDX) equipped with an electron probe micro analyzer (EPMA). The content of tin oxide at the bottom surface is preferably 1 to 10 mass%, and the content of tin oxide at the top surface is preferably 1% or less, and more preferably 0.3% or less.

When the glass plate 1 is made of such float glass, the translucent reflective film 2 can be layered on the top surface, and the antifog film 3 can be layered on the bottom surface.

Also, it is preferable that the surface roughness Ra of the glass plate 1 is 10 nm or less. The reason for this is that the larger the surface roughness is, the higher the haze ratio is, which may lead to the glass body 10 being opaque.

### 1-2. Translucent Reflective Film

As shown in FIG. 2, the translucent reflective film 2 includes, for example, a first layer 21 to be layered on the glass plate 1, and a second layer 22 layered on the first layer 21. However, one or more additional layers including a third layer, a fourth layer, and the like can also be provided as needed. When a metal reflective layer made of a metal or semimetal is used as a layer included in the translucent reflective film 2, one or more two-layer units that are each formed by layering a low refractive index layer or high refractive index layer directly on the metal reflective layer, or one or more units that are each formed by layering a low refractive index layer and a high refractive index layer on the metal reflective layer in the stated order can be layered. When a metal reflective layer is not used, one or more units that are each formed by layering a low refractive index layer and a high refractive index layer on a high refractive index layer in the stated order can be layered. The refractive index of the high refractive index layer is preferably, for example, 1.6 or more, and more preferably 1.8 or more. The refractive index of the low refractive index layer is lower than that of the high refractive index layer, and is preferably, for example, 1.6 or less, and more preferably 1.5 or less. Note that the high refractive index layer and the low refractive index layer can also be formed by layering one or more materials as long as the conditions of the refractive indices are satisfied.

Next, materials of the layers included in the translucent reflective film 2 will be described. The layers included in the translucent reflective film 2 can be constituted by a layer made of a metal or a semimetal and a layer made of an inorganic metal oxide. For example, the metal or semimetal is selected as appropriate from silicon (Si), SUS, and other suitable metals or semimetals, and the inorganic metal oxide is selected as appropriate from silicon dioxide (SiO₂), tin oxide (SnO₂), titanium dioxide (TiO₂), and other suitable inorganic metal oxides, such that the above-described ranges of the refractive index are satisfied. For example, the refractive indices of silicon, silicon dioxide, tin oxide, titanium dioxide, SUS, Ag, Al, Cr, Mo, and Ti are about 4.4, about 1.4, about 1.8, about 2.2, about 2.4, about 0.14, about 1.4, about 2.4, about 3.6 and about 2.7, respectively. The layer configuration of the translucent reflective film 2 is not particularly limited, but the following configuration can be employed, for example. The layers can also be doped with additives as appropriate in order to adjust the electrical resistance of the layers. Note that Ag, Al, Cr, Ti, or Mo can also be employed instead of Si used for the first layer of Examples 2 and 3.

**Table 1**

| | First Layer | Second Layer | Third Layer | Fourth Layer |
|---|---|---|---|---|
| Ex. 1 | TiO₂ | - | - | - |
| Ex. 2 | Si | SiO₂ | SnO₂ | - |
| Ex. 3 | TiO₂ | SiO₂ | SnO₂ | - |
| Ex. 4 | Si | SiO₂ | - | - |
| Ex. 5 | SUS | TiO₂ | - | - |

Note that, in Examples 1 and 3, a base layer made of SiO₂ can be provided between the first layer 21 and the glass plate 1. When SUS is used, the visible light absorption can be improved. When the visible light absorption is improved, the sum of the visible light reflectance and the visible light transmittance decreases, and thus the adjustment of the visible light reflectance and the visible light transmittance can be facilitated.

The translucent reflective film 2 formed using the inorganic metal oxides containing a metal or semimetal as described above is suitable for an optical cover glass because the color tone of the translucent reflective film 2 does not significantly change when the translucent reflective film 2 is viewed from a wide range of angles.

The thickness (physical thickness) of the translucent reflective film 2 is preferably 3 to 300 nm, and more preferably 5 to 250 nm. If the thickness of the translucent reflective film 2 is smaller than 10 nm, it is difficult to control the thickness, and thus a problem of a decline in productivity arises. On the other hand, if the thickness is larger than 300 nm, the cost may increase, or the surface unevenness may become prominent, leading to an increase in haze ratio and poor appearance. The thicknesses of the layers included in the translucent reflective film 2 are not particularly limited and can be adjusted as appropriate such that the thickness of the translucent reflective film 2 is within the above-described range. For example, in the Example 2 above, a translucent reflective film that includes a first layer having a thickness of 18 nm, a second layer having a thickness of 85 nm, and a third layer having a thickness of 65 nm can be formed. In the Example 4 above, a configuration can be employed in which a silicon layer has a thickness of about 18 nm, and a silicon dioxide layer has a thickness of about 30 nm. In addition, the thickness of a titanium dioxide layer of Examples 1 and 3 can be set to about 6 nm, and the thickness of an SUS layer of Example 5 can be set to about 8 nm.

Moreover, in Example 2, a low refractive material and a high refractive material can be layered to form the second layer and the third layer, respectively, in order to improve reflection at the first layer. For example, if the thicknesses of the first layer, the second layer, and the third layer are set to 18 nm, 85 nm, and 65 nm, respectively, and the optical thickness of the translucent reflective film is set to 135 nm ± 20 nm, the optical thickness corresponds to a quarter of λ, where λ represents the wavelength of incident light (central wavelength: 550 nm), and thus the reflection at the interface between the first layer and the second layer can be improved. Materials other than those shown in Example 2 may also be used as long as the thicknesses and the refractive indices of the layers can be adjusted as described above.

The visible light transmittance of the glass body 10 adjusted by providing the translucent reflective film 2 is preferably 20% or more and 70% or less, more preferably 35% or more and 60% or less, and particularly preferably 35% or more and 50% or less. The visible light transmittance and the visible light reflectance are substantially in a trade-off relationship, and therefore, it is preferable that, for example, the visible light transmittance value and the visible light reflectance value are the same in the glass body 10. However, a configuration can also be employed in which one of the visible light transmittance and the visible light reflectance is larger than the other, and the visible light transmittance and the visible light reflectance can be adjusted as appropriate in accordance with the performance required for the glass body. For example, adjustment can be performed such that the visible light reflectance is higher than the visible light transmittance. On the other hand, in a half mirror, the visible light reflectance of the translucent reflective film 2 is preferably 30% or more and 80% or less, and more preferably 40% or more and 70% or less.

The visible light transmittance and the visible light reflectance of such a glass body 10 can be adjusted by changing the materials included in or the thickness of the translucent reflective film 2, or the material or thickness of the glass plate 1.

In some cases, a change in color of the glass body 10 is not preferable. Accordingly, when the reflected color tone on the translucent reflective film 2 side is represented using the L*,a*,b* color system, both a* and b* are preferably within a range of ±15, more preferably within a range of ±12, and particularly preferably within a range of ±7. As in the case of the visible light transmittance and the visible light reflectance, a* and b* can be adjusted by changing the materials included in or the thickness of the translucent reflective film 2, or the material or the thickness of the glass plate 1. If a* and b* are within a range of ±15, light of a reflected image can be displayed correctly. It is generally said that, if a* and b* are 3.2 to 6.5, "a reflected color can be considered to be the same as the original color at an impression level". Furthermore, it is generally said that, if a* and b* are 3.2 or less, substantially no difference can be noticed at a color tone level when colors are compared with a certain distance being kept therebetween.

The optical properties of the translucent reflective film of Example 4 above are shown below. The first layer made of silicon had a thickness of 18 nm, and the silicon dioxide layer had a thickness of 30 nm. The visible light transmittance and the visible light reflectance were measured using a spectrophotometer (U4100, manufactured by Hitachi Ltd.). L*, a*, and b* were calculated in accordance with JIS Z8781. D65 was used as a light source. The results were as follows.

**Table 2**

| | | |
|---|---|---|
| Transmission | L* | 65.2 |
| | a* | 2.7 |
| | b* | 19.7 |
| Reflection on translucent reflective film side | L* | 77.8 |
| | a* | -2.9 |
| | b* | -2.4 |
| Reflection on glass plate side | L* | 74.9 |
| | a* | -4.8 |
| | b* | -3.4 |
| Visible light transmittance | | 34.2% |
| Visible light reflectance | | 52.9% |

In the optical properties above, a* and b* of the reflected color tones are 6.5 or less. Moreover, b* of the transmitted color tone is increased. Accordingly, the reflected color tones are more neutral than the transmitted color tones.

It is preferable that the thermal conductivity of the translucent reflective film 2 is larger than that of the glass plate 1. This makes it possible to reduce an in-plane temperature difference compared with the glass plate 1, thus making it possible to prevent partial dew condensation. Note that, since the thermal conductivity of the glass plate 1 is 0.55 to 1.00 (W/m·K), the thermal conductivity of the translucent reflective film 2 is preferably 1.2 to 200 (W/m·K), which exceeds the above-mentioned range.

The surface roughness Ra of the translucent reflective film 2 is preferably 15 nm or less, and more preferably 10 nm or less. The reason for this is that the larger the surface roughness is, the higher the haze ratio is, which may lead to the glass body 10 being opaque. Note that "the surface roughness Ra of the translucent reflective film 2" refers to the surface roughness Ra when another layer is not layered on the translucent reflective film 2 and the surface roughness Ra of the translucent reflective film 2 can be directly measured.

### 1-3. Method for Forming Translucent Reflective Film

Next, a method for forming the translucent reflective film 2 will be described. There is no particular limitation on the method for forming the translucent reflective film 2, and examples thereof include physical vapor deposition methods such as a sputtering method and a vacuum deposition method, spraying methods, and chemical vapor deposition methods (CVD methods). In particular, when a CVD method is employed, an online CVD method is preferable. The online CVD method is one chemical vapor deposition method, and is performed as follows: in a glass manufacturing step of the float method, a material for forming a translucent reflective film is supplied from a coater onto the top surface of a glass ribbon that is located on a molten tin bath and has a temperature of 615°C or higher, and then the translucent reflective film 2 is formed through a thermal decomposition oxidation reaction.

Each of the layers included in the translucent reflective film 2 can be formed by supplying one material from one coater, but one layer can be formed using two or more coaters when a layer has a large thickness. For example, when the silicon layer has a thickness of 18 nm and the silicon dioxide layer has a thickness of 30 nm in Example 4 above, the translucent reflective film 2 can be formed by preparing first to third coaters, supplying silicon using the first coater, and supplying silicon dioxide using the second and third coaters.

Note that the above-described SUS layer is formed through sputtering and not CVD. It is preferable to use sputtering to form a thin layer of a certain material.

### 1-4. Antifog Film

There is no particular limitation on the antifog film 3 as long as it exhibits an antifog effect on the glass plate 1, and a known antifog film can be used. In general, the types of the antifog film 3 include a hydrophilic type that makes water generated from water vapor into a water layer on its surface, a water absorbent type that absorbs water vapor, a water repellent-absorbent type that is unlikely to condense water to form waterdrops on its surface, and a water repellent type that repels waterdrops produced by water vapor. All the types of antifog films can be used. An antifog film of the water repellent-absorbent type will be described below as an example of the antifog film.

### Organic-Inorganic Complex Antifog Film

An organic-inorganic complex antifog film is a single-layer film formed on the surface of the glass plate 1, or a multi-layer film layered on the surface of the glass plate 1. The organic-inorganic complex antifog film contains at least a water absorbent resin, a water repellent group, and a metallic oxide component. The antifog film 3 may further include other functional components as needed. There is no limitation on the type of water absorbent resin as long as it can absorb and hold water. The antifog film 3 can be supplied with a water repellent group using a metallic compound containing a water repellent group (water repellent group-containing metallic compound). The antifog film 3 can be supplied with a metallic oxide component using a metallic compound other than the water repellent group-containing metallic compound, minute particles of a metallic oxide, or the like. Hereinafter, these components will be described.

### Water Absorbent Resin

There is no particular limitation on the water absorbent resin, and examples thereof include polyethylene glycol, polyether-based resins, polyurethane resins, starch-based resins, cellulose-based resins, acrylic resins, epoxy resins, polyester polyols, hydroxyalkyl celluloses, polyvinyl alcohols, polyvinyl pyrrolidone, polyvinyl acetal resins, and polyvinyl acetate. Out of these resins, hydroxyalkyl celluloses, polyvinyl alcohols, polyvinyl pyrrolidone, polyvinyl acetal resins, polyvinyl acetate, epoxy resins, and polyurethane resins are preferable, polyvinyl acetal resins, epoxy resins, and polyurethane resins are more preferable, and polyvinyl acetal resins are particularly preferable.

A polyvinyl acetal resin can be obtained by acetalizing an aldehyde with a polyvinyl alcohol through a condensation reaction. It is sufficient that the acetalization using polyvinyl alcohol is performed using a known method such as a precipitation method in which an aqueous medium is used in the presence of an acid catalyst, or a dissolution method in which a solvent such as an alcohol is used. The acetalization can be performed along with the saponification of polyvinyl acetate. The degree of acetalization is preferably 2 to 40 mol%, more preferably 3 to 30 mol%, and particularly preferably 5 to 20 mol%, and optionally 5 to 15 mol%. The degree of acetalization can be measured based on, for example, ¹³C nuclear magnetic resonance spectroscopy. The polyvinyl acetal resins whose degree of acetalization is within the above-mentioned range are suitable for forming an organic-inorganic complex antifog film having favorable water absorbing properties and water resistance.

The average degree of polymerization of the polyvinyl alcohol is preferably 200 to 4500, and more preferably 500 to 4500. A high average degree of polymerization is advantageous in the formation of an organic-inorganic complex antifog film having favorable water absorbing properties and water resistance, but if the average degree of polymerization is excessively high, the viscosity of the solution will be excessively high, and the formation of the film may be negatively affected. The degree of saponification of the polyvinyl alcohol is preferably 75 to 99.8 mol%.

Examples of the aldehyde to be condensed with polyvinyl alcohol through a condensation reaction include aliphatic aldehydes such as formaldehyde, acetaldehyde, butyraldehyde, hexylcarbaldehyde, octylcarbaldehyde, and decylcarbaldehyde. Examples thereof also include aromatic aldehydes including benzaldehyde; benzaldehyde subjected to substitution using an alkyl group such as 2-methylbenzaldehyde, 3-methylbenzaldehyde, 4-methylbenzaldehyde, or the like; benzaldehyde subjected to substitution using a halogen atom such as chlorobenzaldehyde or the like; substituted benzaldehyde in which a hydrogen atom is substituted with a functional group such as a hydroxy group, an alkoxy group, an amino group, or a cyano group, other than alkyl groups; and condensed aromatic aldehyde such as naphtaldehyde or anthraldehyde. Aromatic aldehydes, which are highly hydrophobic, are advantageous in the formation of an organic-inorganic complex antifog film with a low degree of acetalization and excellent water resistance. Use of aromatic aldehydes is also advantageous in that a film having high water absorbency is formed while a large number of hydroxy groups are caused to remain. It is preferable that the polyvinyl acetal resins have an acetal structure derived from an aromatic aldehyde, particularly benzaldehyde.

Examples of the epoxy resins include glycidyl ether-based epoxy resins, glycidyl ester-based epoxy resins, glycidyl amine-based epoxy resins, and cyclic aliphatic epoxy resins. Out of these epoxy resins, the cyclic aliphatic epoxy resins are preferable.

Examples of the polyurethane resins include polyurethane resins constituted by polyisocyanate and polyol. Acrylic polyol and polyoxyalkylene-based polyol are preferable as the polyol.

The organic-inorganic complex antifog film contains a water absorbent resin as a main component. The term "main component" as used in the present invention means a component that is contained in the largest amount in terms of mass. The content of the water absorbent resin based on the weight of the organic-inorganic complex antifog film is preferably 50 weight% or more, more preferably 60 weight% or more, and particularly preferably 65 weight% or more, and is 95 weight% or less, and more preferably 90 weight% or less, from the viewpoint of film hardness, water absorbing properties, and antifog properties.

### Water Repellent Group

It is preferable to use a water repellent group, which has high water repellency, in order to sufficiently obtain the above-described effects of the water repellent group. The water repellent group is preferably at least one type of water repellent group selected from (1) chain or cyclic alkyl groups having 3 to 30 carbon atoms and (2) chain or cyclic alkyl groups having 1 to 30 carbon atoms in which at least a portion of hydrogen atoms are substituted with a fluorine atom (also referred to as "fluorine-substituted alkyl groups" hereinafter).

The chain or cyclic alkyl groups in (1) and (2) are preferably chain alkyl groups. The chain alkyl groups may be branched alkyl groups, but are preferably linear alkyl groups. Alkyl groups having more than 30 carbon atoms may lead to the antifog film 3 being opaque. The number of carbon atoms in the alkyl groups is preferably 20 or less and more preferably 6 to 14, from the viewpoint of the balance between the antifog properties, strength, and external appearance of the film. Particularly preferable alkyl groups are linear alkyl groups having 6 to 14, particularly 6 to 12, carbon atoms such as an n-hexyl group (6 carbon atoms), an n-decyl group (10 carbon atoms), and an n-dodecyl group (12 carbon atoms). The fluorine-substituted alkyl groups in (2) may be groups obtained by substituting only a portion of hydrogen atoms of a chain or cyclic alkyl group with a fluorine atom, or groups obtained by substituting all of the hydrogen atoms of a chain or cyclic alkyl group with a fluorine atom, such as linear perfluoroalkyl groups. The fluorine-substituted alkyl groups have high water repellency, and therefore, the effects can be sufficiently obtained by adding a small amount thereof. Note that, when the content of the fluorine-substituted alkyl groups is excessively large, a component containing the fluorine-substituted alkyl groups may be separated from the other components in a coating solution for forming a film.

### Hydrolyzable Metallic Compound Containing Water Repellent Group

In order to blend the water repellent groups into the antifog film 3, it is sufficient that a metallic compound containing a water repellent group (water repellent group-containing metallic compound), particularly a metallic compound containing a water repellent group and a hydrolyzable functional group or a halogen atom (water repellent group-containing hydrolyzable metallic compound), or a hydrolysate thereof is added to a coating solution for forming a film. In other words, the water repellent group may be derived from the water repellent group-containing hydrolyzable metallic compound. A water repellent group-containing hydrolyzable silicon compound represented by Formula (I) below is preferably used as the water repellent group-containing hydrolyzable metallic compound.

RₘSiY₄₋ₘ (I)

Here, R represents a water repellent group, that is, a chain or cyclic alkyl group having 1 to 30 carbon atoms in which at least a portion of hydrogen atoms are optionally substituted with a fluorine atom, and Y represents a hydrolyzable functional group or a halogen atom, and m represents an integer of 1 to 3. The hydrolyzable functional group is at least one type selected from an alkoxyl group, an acetoxy group, an alkenyloxy group, and an amino group, and preferably an alkoxy group, particularly an alkoxy group having 1 to 4 carbon atoms. An example of the alkenyloxy group is an isopropenoxy group. The halogen atom is preferably a chlorine atom. Note that the functional groups shown here as examples can also be used as "hydrolyzable functional groups" described hereinafter. m is preferably 1 or 2.

When the progress of hydrolysis and polycondensation is completed, the compound represented by Formula (I) supplies a component represented by Formula (II) below.

RₘSiO_{(4-m)/2} (II)

Here, R and m are as described above. In practice, after the hydrolysis and polycondensation have been performed, the compounds represented by Formula (II) form a network structure in which silicon atoms are linked to one another via oxygen atoms, in the antifog film 3.

As described above, the compounds represented by Formula (I) are hydrolyzed or partially hydrolyzed, and at least portions thereof are polycondensed. Thus, a network structure including siloxane bonds (Si-O-Si) is formed in which silicon atoms and oxygen atoms are alternately linked and that spreads three-dimensionally. A water repellent group R is linked to the silicon atom contained in this network structure. In other words, the water repellent group R is immobilized in the network structure that includes siloxane bonds, via an R-Si bond. This structure is advantageous in uniform dispersion of the water repellent groups R in the film. The network structure may contain silica components supplied from silicon compounds (e.g., tetraalkoxysilane and silane coupling agents) other than the water repellent group-containing hydrolyzable silicon compound represented by Formula (I). If a silicon compound that does not contain a water repellent group and contains a hydrolyzable functional group or halogen atom (water repellent group-free hydrolyzable silicon compound) is blended together with the water repellent group-containing hydrolyzable silicon compound into a coating solution for forming the antifog film 3, a network structure that includes siloxane bonds containing silicon atoms that are linked to water repellent groups and silicon atoms that are not linked to water repellent groups can be formed. With such a structure, it is easy to independently adjust the content of the water repellent group and the content of the metallic oxide component in the antifog film.

The water repellent groups exhibit an effect of enhancing the antifog performance by enhancing water vapor permeability of the surface of the antifog film 3 containing a water absorbent resin. The two functions, namely the water absorbent function and the water repellent function, are contrary to each other, and therefore, conventionally, a water absorbent material and a water repellent material are distributed in separate layers. However, the maldistribution of water near the surface of the antifog film is resolved due to the water repellent groups, so that the time it takes until dew condenses is prolonged, and the antifog properties of the antifog film having a single-layer structure are thus enhanced. The following is a description of the effects.

Water vapor that has infiltrated the antifog film 3 containing the water absorbent resin forms hydrogen bonds with hydroxy groups in the water absorbent resin and the like, and is retained in the form of bound water. As the amount of water vapor increases, the form of water vapor changes from bound water to semibound water, and finally, water vapor is retained in the form of free water retained in voids in the antifog film. The water repellent groups prevent the formation of hydrogen bonds and facilitate the dissociation of formed hydrogen bonds in the antifog film 3. If the content of the water absorbent resin is the same, the number of hydroxy groups capable of forming a hydrogen bond in the film is the same, but the speed of hydrogen bond formation is reduced due to the water repellent groups. Therefore, if the antifog film 3 containing the water repellent groups is used, moisture will ultimately be retained in any of the above-mentioned forms in the film, but water vapor can diffuse to the bottom portion of the film as it is until it is retained therein. Moreover, water that is once retained dissociates relatively easily and is likely to move to the bottom portion of the film in the form of water vapor. As a result, the distribution of the retention amount of moisture in the thickness direction of the film is relatively uniform between the vicinity of the surface and the bottom portion of the film. That is, the entirety in the thickness direction of the antifog film can be effectively used to absorb water supplied to the surface of the film, and therefore, waterdrops are less likely to be formed on the surface through condensation, thus resulting in the enhancement of antifog properties. Furthermore, since waterdrops are less likely to be formed on the surface through condensation, the antifog film 3 is characterized in that it is less likely to freeze up even when being exposed to a low temperature after absorbing moisture.

On the other hand, with an antifog film 3 that does not contain the water repellent groups, water vapor that has infiltrated the film is retained significantly easily in the form of bound water, semibound water, or free water. Therefore, water vapor that has infiltrated the film tends to be retained in the vicinity of the surface of the film. As a result, in the film, the amount of moisture is extremely large in the vicinity of the surface, and rapidly decreases toward the bottom portion of the film. That is, although the bottom portion of the film can further absorb water, moisture saturates in the vicinity of the surface of the film and condenses into waterdrops, and therefore, the antifog properties are limited.

When the water repellent groups are introduced into the antifog film using the water repellent group-containing hydrolyzable silicon compound (see Formula (I)), a network structure that includes stable siloxane bonds (Si-O-Si) is formed. The formation of this network structure is advantageous from the viewpoint that not only abrasion resistance but also hardness, water resistance, and the like are enhanced.

It is sufficient that the water repellent groups are added in amounts at which the contact angle of water on the surface of the antifog film 3 is 70° or more, preferably 80° or more, and more preferably 90° or more. A measurement value obtained by dropping a 4 mg drop of water onto the surface of the film is taken as the contact angle of water. In particular, when a methyl group or ethyl group, which has slightly low water repellency, is used as the water repellent group, it is preferable to blend, into the antifog film 3, the repellent groups in amounts at which the contact angle of water is within the above-mentioned range. The upper limit of the contact angle of waterdrop is not particularly limited, but is, for example, 150° or less, 120° or less, or 100° or less. It is preferable that the water repellent groups are uniformly contained in the antifog film 3 such that the contact angle of waterdrop is within the above-mentioned range over the entire region of the surface of the antifog film 3.

Note that it is also possible to make the surface of the antifog film 3 water-repellent. With this configuration, it is possible to suppress infiltration of alkaline components into the antifog film 3, thus making it possible to protect the surface of the glass plate 1 from the alkaline components.

It is preferable that the antifog film 3 contains the water repellent groups such that the amount of water repellent groups is within a range of 0.05 parts by mass or more, preferably within a range of 0.1 parts by mass or more and more preferably within a range of 0.3 parts by mass or more, and within a range of 10 parts by mass or less and preferably within a range of 5 parts by mass or less, with respect to 100 parts by mass of the water absorbent resin.

### Inorganic Oxide

The inorganic oxide is, for example, an oxide of at least one type of element selected from Si, Ti, Zr, Ta, Nb, Nd, La, Ce, and Sn, and contains at least an oxide of Si (silica). It is preferable that the organic-inorganic complex antifog film contains the inorganic oxide such that the amount of the inorganic oxide is preferably 0.01 parts by weight or more, more preferably 0.1 parts by weight or more, even more preferably 0.2 parts by weight or more, particularly preferably 1 part by weight or more, most preferably 5 parts by weight or more, optionally 10 parts by weight or more, and 20 parts by weight or more if necessary, with respect to 100 parts by weight of the water absorbent resin, and preferably 50 parts by weight or less, more preferably 45 parts by weight or less, even more preferably 40 parts by weight or less, particularly preferably 35 parts by weight or less, most preferably 33 parts by weight or less, and optionally 30 parts by weight or less. The inorganic oxide is a component necessary for ensuring the strength of the organic-inorganic complex antifog film, particularly scratch resistance, but if the content of the inorganic oxide is large, the antifog properties of the organic-inorganic complex antifog film are impaired.

### Minute Particles of Inorganic Oxide

The organic-inorganic complex antifog film may further contain minute particles of an inorganic oxide as at least a portion of the inorganic oxide. The inorganic oxide constituting the minute particles of an inorganic oxide is, for example an oxide of at least one type of element selected from Si, Ti, Zr, Ta, Nb, Nd, La, Ce, and Sn, with minute particles of silica being preferable. The minute particles of silica can be introduced into the organic-inorganic complex antifog film by adding, for example, colloidal silica thereto. The minute particles of an inorganic oxide excel at transmitting stress applied to the organic-inorganic complex antifog film to an article that supports the organic-inorganic complex antifog film, and also have a high hardness. Therefore, the addition of the minute particles of an inorganic oxide is advantageous from the viewpoint of enhancing the abrasion resistance and scratch resistance of the organic-inorganic complex antifog film. Moreover, when the minute particles of an inorganic oxide are added to the organic-inorganic complex antifog film, minute voids are formed in portions where the minute particles are in contact with one another or close to one another, and water vapor is likely to become trapped in the film through these voids. Accordingly, the addition of the minute particles of an inorganic oxide may advantageously act to enhance the antifog properties. Minute particles of an inorganic oxide that have been formed in advance are added to a coating solution for forming an organic-inorganic complex antifog film, and the minute particles of an inorganic oxide can thus be supplied to the organic-inorganic complex antifog film.

When the average particle diameter of the minute particles of an inorganic oxide is excessively large, the organic-inorganic complex antifog film may be opaque, whereas when the average particle diameter of the minute particles of an inorganic oxide is excessively small, the minute particles aggregate, thus making it difficult to uniformly disperse the minute particles. From this viewpoint, the average particle diameter of the minute particles of an inorganic oxide is preferably 1 to 20 nm, and more preferably 5 to 20 nm. Note that the average particle diameter of the minute particles of an inorganic oxide in the form of primary particles is taken as the average particle diameter of the minute particles of an inorganic oxide described herein. The average diameter of the minute particles of an inorganic oxide is determined by measuring, through observation using a scanning electron microscope, the particle diameters of fifty randomly selected minute particles and employing the average value thereof. If the content of the minute particles of an inorganic oxide is large, there is a risk that the amount of water absorption will decrease in the entire organic-inorganic complex antifog film, and thus the organic-inorganic complex antifog film becomes opaque. It is preferable to add the minute particles of an inorganic oxide such that the amount thereof is preferably 0 to 50 parts by weight, more preferably 2 to 30 parts by weight, even more preferably 5 to 25 parts by weight, and particularly preferably 10 to 20 parts by weight, with respect to 100 parts by weight of the water absorbent resin.

### Hydrolyzable Metallic Compound Containing No Water Repellent Groups

The antifog film may contain a metallic oxide component derived from a hydrolyzable metallic compound that does not contain a water repellent group (water repellent group-free hydrolyzable compound). A preferable water repellent group-free hydrolyzable metallic compound is a hydrolyzable silicon compound that does not contain a water repellent group. The hydrolyzable silicon compound that does not contain a water repellent group is at least one type of silicon compound (note that a water repellent group is not contained) selected from silicon alkoxide, chlorosilane, acetoxysilane, alkenyloxysilane, and aminosilne, with silicon alkoxide that does not contain a water repellent group being preferable. Note that an example of the alkenyloxysilane is isopropenoxysilane.

The hydrolyzable silicon compound that does not contain a water repellent group may be a compound represented by Formula (III) below.

SiY₄ (III)

As described above, Y represents a hydrolyzable functional group, and is preferably at least one selected from an alkoxyl group, an acetoxy group, an alkenyloxy group, an amino group, and a halogen atom.

The water repellent group-free hydrolyzable metallic compounds are hydrolyzed or partially hydrolyzed, and at least portions thereof are polycondensed. Thus, a metallic oxide component in which metallic atoms and oxygen atoms are linked is supplied. This component firmly joins the minute particles of a metallic oxide and the water absorbent resin, and may contribute to the enhancement of the abrasion resistance, hardness, water resistance, and the like of the antifog film. It is preferable to set the amount of metallic oxide component derived from the hydrolyzable metallic compound that does not contain a water repellent group to be within a range of 0 to 40 parts by mass, preferably 0.1 to 30 parts by mass, more preferably 1 to 20 parts by mass, particularly preferably 3 to 10 parts by mass, and optionally 4 to 12 parts by mass, with respect to 100 parts by mass of the water absorbent resin.

A preferable example of the hydrolyzable silicon compound that does not contain a water repellent group is tetraalkoxysilane, and more specifically, tetraalkoxysilane containing an alkoxy group having 1 to 4 carbon atoms. The tetraalkoxysilane is, for example, at least one selected from tetramethoxysilane, tetraethoxysilane, tetra-n-propoxysilane, tetraisopropoxysilane, tetra-n-butoxysilane, tetraisobutoxysilane, tetra-sec-butoxysilane, and tetra-tert-butoxysilane.

If the content of the metallic oxide (silica) component derived from tetraalkoxysilane is excessively large, the antifog properties of the antifog film may be impaired. One reason for this is that the flexibility of the antifog film is impaired, and thus the swelling and shrinkage of the film caused by the absorption and discharge of moisture are limited. It is preferable to add the metallic oxide component derived from tetraalkoxysilane such that the amount thereof is within a range of 0 to 30 parts by mass, preferably 1 to 20 parts by mass, and more preferably 3 to 10 parts by mass, with respect to 100 parts by mass of the water absorbent resin.

Another preferable example of the hydrolyzable silicon compound that does not contain a water repellent group is a silane coupling agent. The silane coupling agent is a silicon compound containing active functional groups that are different from each other. It is preferable that a portion of the active functional groups are hydrolyzable functional groups. An example of the silane coupling agent is a silicon compound containing an epoxy group and/or an amino group and a hydrolyzable functional group. Preferable examples of the silane coupling agent include glycidyloxyalkyltrialkoxysilane and aminoalkyltrialkoxysilane. It is preferable that, in these silane coupling agents, an alkylene group that is directly linked to a silicon atom has 1 to 3 carbon atoms. Since a glycidyloxyalkyl group and an aminoalkyl group contain a hydrophilic functional group (epoxy group, amino group), they are not water-repellent as a whole even though they contain an alkylene group.

The silane coupling agent firmly couples water absorbent resin, which is an organic component, and the minute particles of a metallic oxide and the like, which are inorganic components, and may contribute to the enhancement of the abrasion resistance, hardness, water resistance, and the like of the antifog film 3. However, when the content of the metallic oxide (silica) component derived from the silane coupling agent is excessively large, the antifog properties of the antifog film 3 is impaired, and the antifog film 3 may be opaque in some cases. It is preferable to add the metallic oxide component derived from the silane coupling agent such that the amount thereof is within a range of 0 to 10 parts by mass, preferably 0.05 to 5 parts by mass, and more preferably 0.1 to 2 parts by mass, with respect to 100 parts by mass of the water absorbent resin.

### Cross-Linked Structure

In addition, the antifog film 3 may also include a cross-linked structure formed using a cross-linking agent, preferably at least one type of cross-linking agent selected from an organic boron compound, an organic titanium compound, and an organic zirconium compound. The introduction of the cross-linked structure enhances the abrasion resistance, scratch resistance, and water resistance of the antifog film 3. From another viewpoint, the introduction of the cross-linked structure facilitates the improvement of the durability of the antifog film 3 without impairing the antifog properties thereof.

When the cross-linked structure formed using a cross-linking agent is introduced into the antifog film 3 in which the metallic oxide component is a silica component, the antifog film may contain a metallic atom other than silicon, preferably boron, titanium, or zirconium, in addition to silicon, as metallic atoms.

There is no particular limitation on the type of cross-linking agent as long as the used water absorbent resin can be cross-linked. Here, only examples of the organic titanium compound will be listed. The organic titanium compound is, for example, at least one selected from a titanium alkoxide, a titanium chelate-based compound, and titanium acylate. Examples of the titanium alkoxide include titanium tetraisopropoxide, titanium tetra-n-butoxide, and titanium tetraoctoxide. Examples of the titanium chelate-based compound include titanium acetylacetonate, titanium ethyl acetoacetate, titanium octyleneglycol, titanium triethanolamine, and titanium lactate. The titanium lactate may be an ammonium salt thereof (titanium lactate ammonium). An example of the titanium acylate is titanium stearate. A preferable organic titanium compound is a titanium chelate compound, particularly titanium lactate.

When the water absorbent resin is polyvinyl acetal, a preferable cross-linking agent is an organic titanium compound, particularly titanium lactate.

### Other Optional Components

Other additives may also be blended into the antifog film 3. Examples of the additives include glycols such as glycerin and ethylene glycol that have the function of improving the antifog properties. A surfactant, a leveling agent, an ultraviolet absorbing agent, a coloring agent, an antifoaming agent, an antiseptic agent, and the like may be used as the additives.

### Base Layer

Although the antifog film 3 can be layered directly on the glass plate 1, the antifog film 3 can also be layered on a base layer formed on the glass plate 1. Layering the antifog film 3 on the glass plate 1 via the base layer as described above makes it less likely that the antifog film 3 peels off. The base layer can be made of, for example, a silane coupling agent.

### Thickness

It is sufficient that the thickness of the organic-inorganic complex antifog film is adjusted as appropriate according to required antifog performance and the like. The thickness of the organic-inorganic complex antifog film is preferably 2 to 15 µm, more preferably 2 to 12 µm, and even more preferably 3 to 10 µm. If the thickness of the antifog film 3 is 2 µm or more, a sufficient antifog effect can be obtained. On the other hand, if the thickness of the antifog film 3 is excessively large, a reflected image may be distorted due to an uneven thickness. Moreover, the antifog film 3 is made of a resin material as mentioned above and thus has a birefringence index. Accordingly, the thickness is excessively large, a blurred image may be obtained.

Also, it is possible to determine the thickness of the antifog film 3 based on a different viewpoint. The antifog film 3 adheres to the glass plate 1, and therefore, it is preferable that the thickness of the antifog film 3 is, for example, 5 µm or more because it is possible to prevent broken pieces of the glass plate 1 from scattering. From this viewpoint, the thickness of the antifog film 3 is more preferably 10 µm or more. Moreover, a difference in an optical thickness of the antifog film 3 is preferably 150 nm or more. Note that the difference in an optical thickness is defined as a value obtained by multiplying a difference between the minimum thickness and the maximum thickness when observing the antifog film 3 by the refractive index of the antifog film.

### 1-5. Relationship between Antifog Film and Interference Fringes

The inventors of the present invention obtained the following findings regarding interference fringes that may occur in the glass body 10 when the antifog film 3 is formed.
(1) For example, if the visible light reflectance of the translucent reflective film 2 is 30% or more when interference fringes occur, the interference fringes become clear due to high reflectance.
(2) If the antifog film 3 is formed on the translucent reflective film 2, and the difference in an optical thickness of the antifog film 3 is 150 nm or more, interference fringes are likely to occur because the phase shift increases due to the difference in an optical thickness.
(3) If the thickness of the antifog film 3 is 10 µm or more, the regularity of the wave front of visible light that has entered the antifog film 3 becomes unclear or vanishes when the visible light reaches the interface of the antifog film 3 on a side opposite to the light entrance surface, thus making it possible to make interference fringes that occur due to the uneven thickness of the antifog film 3 unclear or make the interference fringes vanish. The reason for this is as follows.

First, in general, light that enters the glass body 10 is incoherent light such as natural light or light from a lamp, but incident incoherent light has an irregular wave front. If an optical path length is short, regularity is observed in the wave front of incoherent light at the light entrance surface, and thus interference fringes occur. On the other hand, if an optical path length is long, the regularity of the wave front observed at the light entrance surface becomes difficult to recognize, and if an optical path length is longer than the coherence length, the regularity of the wave front observed at the light entrance surface vanishes. Accordingly, if an optical path length is long, the regularity of the wave front of reflected light becomes difficult to recognize, and thus interference fringes formed by light reflected by the light entrance surface become unclear. Furthermore, if an optical path length is longer than the coherence length, interference fringes vanish.

### 1-6. Method for Forming Antifog Film

Next, a method for forming the antifog film 3 will be described. There is no particular limitation on the method for forming the antifog film 3. However, the above-described organic-inorganic complex antifog film 3 can be formed, for example, by applying a coating solution for forming an organic-inorganic complex antifog film onto a transparent substrate or the like serving as the glass plate 1, and drying the glass plate 1 onto which the coating solution has been applied. It is sufficient that known materials and methods are respectively used as the solvent to be used for the preparation of the coating solution and a method for applying the coating solution. At this time, the atmosphere is preferably kept at a relative humidity less than 40%, and more preferably 30% or less. Keeping the atmosphere at a low relative humidity makes it possible to prevent the organic-inorganic complex antifog film from absorbing an excessive amount of moisture from the atmosphere. If a large amount of moisture is absorbed from the atmosphere, there is a risk that water will enter and remain in the matrix of the organic-inorganic complex antifog film and cause the strength of the film to deteriorate.

It is preferable that the step of drying the glass plate 1 onto which the coating solution has been applied includes an air-drying step and a heat-drying step for performing drying by heating. It is preferable to perform the air-drying step by exposing the coating solution to an atmosphere that is kept at a relative humidity of less than 40%, and more preferably 30% or less. The air-drying step can be performed as a non-heating step. In other words, it can be performed at room temperature. When the coating solution contains a hydrolyzable silicon compound, in the heat-drying step, dehydration progresses in which silanol groups contained in the hydrolysates of silicon compounds and hydroxy groups present on an article are involved, and a matrix structure (network of Si-O bonds) that includes silicon atoms and oxygen atoms develops. The air-drying step can be performed for, for example, about 10 minutes.

In order to prevent the decomposition of organic substances such as the water absorbent resin, it is preferable that the temperature applied in the heat-drying step is not excessively high. In this case, an appropriate heating temperature is 300°C or lower (e.g., 100 to 200°C). Specifically, three steps can be performed. For example, firing is performed at a temperature of about 120°C for about 5 minutes, drying is performed at a temperature of about 80°C and a humidity of 90% for about 2 hours, and then firing is performed at a temperature of about 120°C for about 30 minutes. The formation of the antifog film 3 is thus completed.

### 1-7. Haze Ratio of Glass Body

The glass body 10 is a half mirror, and can be used as a cover for an article. Accordingly, it is preferable that the glass body has a low haze ratio such that an article can be visually confirmed through the glass body 10. For example, the haze ratio of the glass body 10 is preferably 2.0% or less, and more preferably 1.5% or less.

The haze ratio can be measured using, for example, an integrating sphere-type light transmittance measurement apparatus ("HGM?2DP", manufactured by Suga Test Instruments Co., Ltd.; a C light source is used, and light is made incident from the membrane surface side). The haze ratio can be measured from translucent reflective film 2 side as well as the antifog film 3 side.

### 2. Features

The glass body 10 according to this embodiment can exhibit the following effects.
(1) The glass body 10 according to this embodiment includes the translucent reflective film 2 whose visible light reflectance and visible light transmittance are adjusted, and can thus be used as a half mirror. In addition, the antifog film 3 is provided, thus making it possible to suppress fogging of the glass plate 1.
(2) Since the translucent reflective film is layered on the first surface 11 of the glass plate 1 and the antifog film 3 is layered on the second surface 12, this embodiment has the following advantages.
   (2-1) For example, if the antifog film 3 is layered on the translucent reflective film 2, interference fringes may occur depending on a light source. However, when the translucent reflective film 2 and the antifog film 3 are layered on the surfaces 11 and 12 of the glass plate 1, respectively, it is possible to suppress the occurrence of interference fringes.
   (2-2) When the glass plate 1 is made of float glass, deposition of alkaline components contained in the glass plate 1 is suppressed at the bottom surface at which the content of tin oxide is high. Accordingly, layering the antifog film 3 on the bottom surface of the glass plate 1 makes it possible to suppress deterioration of the antifog film 3 caused by the alkaline components (e.g., the antifog film 3 can be prevented from becoming opaque). In particular, the antifog film 3 constituted by an organic-inorganic complex antifog film is likely to be deteriorated due to the alkaline components. Accordingly, it is advantageous to layer the antifog film 3 on the bottom surface of the glass plate 1. On the other hand, the content of tin oxide is low at the top surface of the glass plate 1, and therefore, alkaline components are more likely to deposit thereon compared with the bottom surface. However, the translucent reflective film 2 is made of an inorganic metal oxide and is thus less likely to be affected by the alkaline components, and deterioration thereof is suppressed.
   (2-3) The antifog film 3 can adhere more tightly to the glass plate 1 than to the translucent reflective film 2. The reason for this is that the glass plate 1 and the antifog film 3 adhere tightly to each other via silanol bonds.
(3) As mentioned above, the haze ratio can be reduced by reducing the surface roughness Ra of the translucent reflective film 2 or glass plate 1. However, if the surface roughness Ra is small, there is a risk that waterdrops are more likely to attach thereto during dew condensation, fogging is thus more likely to occur. Therefore, in this embodiment, fogging of the second surface 12 of the glass plate 1 to which waterdrops are likely to attach is suppressed by layering the antifog film 3 on the second surface 12 of the glass plate 1. Note that, if the surface roughness Ra is large, a water film is likely to be formed during dew condensation, which leads to an increase in the surface area of moisture. Thus, the water easily evaporates, and fogging is less likely to occur.

Note that, although there is no particular limitation on the orientation of the glass body 10, it is preferable that the antifog film 3 faces a side on which fogging is likely to occur (e.g., higher-temperature side).

### 3. Modified Examples

Although an embodiment of the present invention has been described above, the present invention is not limited to the embodiment above, and various modifications can be carried out without departing from the gist of the invention. Note that the following modified examples can be combined as appropriate.

### 3-1

In the embodiment above, the antifog film 3 is layered on the second surface 12 of the glass plate 1. However, for example, the antifog film 3 can also be layered on the translucent reflective film 2 as shown in FIG. 4. With this configuration, the following effects can be obtained.
(1) In the case where the thermal conductivity of the translucent reflective film 2 is larger than the thermal conductivity of the glass plate 1, if a portion of the glass body 10 on, for example, the glass plate 1 side is cooled, heat on the translucent reflective film 2 side is likely to be transmitted to the translucent reflective film 2, and thus fogging is likely to occur. Accordingly, such fogging can be suppressed by layering the antifog film 3 on the translucent reflective film 2.
(2) In the case where the outermost layer of the translucent reflective film 2 is made of, for example, SiO₂, when the translucent reflective film is washed using an alkaline detergent, SiO₂ may be deteriorated due to alkaline components because SiO₂ has low alkali resistance. Accordingly, SiO2 can be protected from the alkaline components by covering SiO₂ by antifog film 3. In particular, if the surface of the antifog film 3 is made water-repellent, infiltration of the alkaline components into the antifog film 3 can be suppressed, thus making it possible to further protect the SiO2.
(3) Since the antifog film 3 is not in direct contact with the glass plate 1, it is possible to prevent alkali components that deposit from the glass plate 1 from coming into contact with the antifog film 3, and prevent the antifog film 3 from being deteriorated (e.g., becoming opaque).

Note that, if the antifog film 3 is layered on the translucent reflective film 2, there is a risk that interference fringes are likely to occur as mentioned above. In this case, it is preferable to reduce a difference in a refractive index between the antifog film 3 and the translucent reflective film 2. Specifically, the difference in a refractive index is preferably 0.1 or less. If the difference in a refractive index is reduced, reflection at the interface between the antifog film 3 and the translucent reflective film 2 can be suppressed, thus making it possible to suppress interference. Moreover, if the difference in a refractive index is small, the amplitude of light will be reduced, and thus interference fringes are less likely to be observed. Furthermore, interference fringes can be further suppressed by setting the refractive index of the antifog film 3 to 1.6 or less.

### 3-2

The antifog film 3 can also be layered on both the translucent reflective film 2 and the second surface 12 of the glass plate 1.

### 3-3

In the embodiment above, the antifog film 3 is layered directly on the second surface 12 of the glass plate 1. However, a configuration can also be employed in which an antifog sheet is attached thereto. The antifog sheet includes a transparent sheet-like film substrate, the above-mentioned antifog layer layered on one surface of the film substrate, and a transparent adhesive layer layered on the other surface of the film substrate. The antifog sheet can be fixed to the glass plate 1 by fixing the adhesive layer to the second surface 12 of the glass plate 1.

The film substrate can be formed using, for example, a transparent resin sheet made of polyethylene, polyethylene terephthalate, or the like. The thickness of the film substrate can be set to, for example, 10 to 100 µm, and is preferably 75 to 100 µm. If the thickness of the film substrate is 10 µm or more, the occurrence of interference fringes between the translucent reflective film 2 and the antifog film 3 can be suppressed. The adhesive layer can be formed by using, for example, an acrylic adhesive or a silicone adhesive. Note that such an antifog sheet can also be attached to the translucent reflective film 2. In this case, interference fringe can be suppressed because the film substrate has a sufficient thickness.

### 3-3

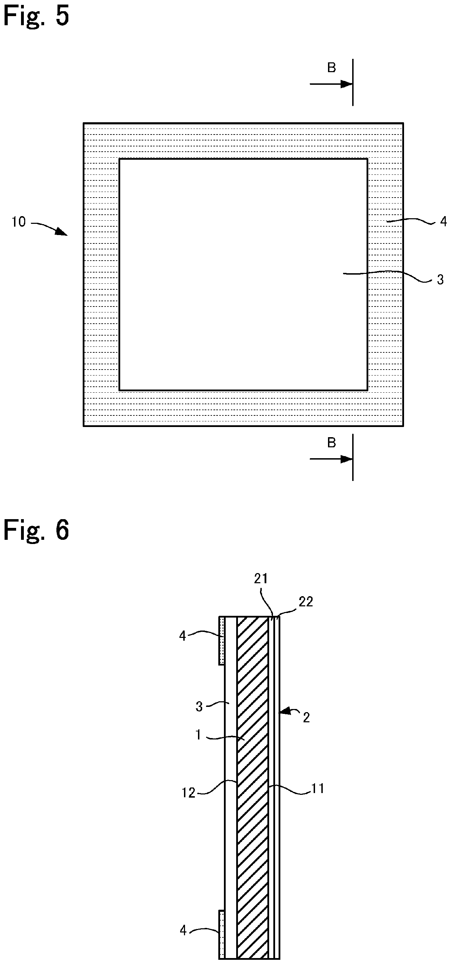

A light-shielding film can also be formed on the antifog film 3. For example, as shown in FIGS. 5 and 6, a light-shielding film 4 can be formed along the peripheral edge of the glass body 10. However, there is no particular limitation on the shape of the light-shielding film 4, and it is sufficient that the light-shielding film 4 is formed on a region to be shielded from light as appropriate. There is no particular limitation on the material constituting the light-shielding film 4 as long as it has light-shielding properties, and, for example, dark-colored ink such as black ink, brown ink, gray ink, or dark blue ink can be layered on the antifog film 3 through printing. Specific examples of the material of the light-shielding film 4 include resins such as a urethane resin, an epoxy resin, an acrylic resin, and polyethylene resin into which a color pigment is blended. The thickness of the light-shielding film 3 is not particularly limited, but can be set to, for example, 30 to 100 µm. Also, a dark-colored film can be attached to the antifog film 3 and used as the light-shielding film. Note that the "light-shielding properties" means, for example, a visible light transmittance of 20% or less.

However, for the purpose of keeping the inner edge of the light-shielding film 4, namely the boundary between the light-shielding film 4 and a region on which the light-shielding film 4 is not layered, from being conspicuous, the light-shielding film 4 can also be colored a warm color or the like instead of a dark color by adjusting a pigment. For example, when the color of the light-shielding film 4 is represented using the L*,a*,b* color system (CIE standard), the chromaticity a* can be set to -10 to 50, the chromaticity b* can be set to -10 to 50, and the chromaticity L* can be set to 10 to 100. The chromaticity a* is preferably 0 to 30, and more preferably 5 to 20. The chromaticity b* is preferably 0 to 30, and more preferably 5 to 20. The chromaticity L* is preferably 10 to 50, and more preferably 10 to 30. With this configuration, it is possible to suppress the conspicuity of the boundary of the light-shielding film 4 as viewed from the second zone 62.

Note that, although the example in which the light-shielding film 4 is formed on the antifog film 3 is shown in the description above, the light-shielding film 4 can also be formed on the translucent reflective film 2 in the same manner. Alternatively, the light-shielding film 4 can also be formed on both the antifog film 3 and the translucent reflective film 2.

### 3-4

There is no particular limitation on the shape of the glass plate 1, and various shapes are possible. Moreover, there is no need to form the translucent reflective film 2 and the antifog film 3 over the entire surface of the glass plate 1, and it is sufficient that they are each formed corresponding to a required area on the glass plate 1.

### LIST OF REFERENCE NUMERALS

- 1: Glass plate
- 2: Translucent reflective film
- 3: Antifog film
- 4: Light-shielding film

## Claims

1. A glass body comprising:
a glass plate having a first surface and a second surface on a side opposite to the first surface;
a translucent reflective film arranged on the first surface of the glass plate; and
an antifog means arranged on at least one of the translucent reflective film and the second surface of the glass plate.

2. The glass body according to claim 1,
wherein the antifog means includes an antifog film, and
the antifog film is provided on the second surface of the glass plate.

3. The glass body according to claim 2,
wherein the translucent reflective film has a surface roughness Ra of 15 nm or less.

4. The glass body according to claim 3,
wherein the glass plate is made of float glass, and
a tin oxide concentration at the first surface is lower than a tin oxide concentration at the second surface.

5. The glass body according to claim 1,
wherein the antifog means includes an antifog film, and
the antifog film is provided on the translucent reflective film.

6. The glass body according to claim 5,
wherein the translucent reflective film is formed by layering a plurality of layers, and a difference in a refractive index between the antifog film and the outermost layer of the translucent reflective film that is adjacent to the antifog film is 0.1 or less.

7. The glass body according to claim 6,
wherein the antifog film has a refractive index of 1.6 or less.

8. The glass body according to any one of claims 5 to 7,
wherein a difference in an optical thickness of the antifog film is 150 nm or more, and
the antifog film has a thickness of 10 µm or more.

9. The glass body according to claim 5 or 6,
wherein the antifog means includes:
the antifog film;
a film substrate that supports the antifog film and has a thickness of 10 µm or more; and
an adhesive layer that is arranged on a surface of the film substrate on a side opposite to the antifog film and is used to fix the film substrate to the translucent reflective film.

10. The glass body according to any one of claims 1 to 9, wherein a haze ratio is 2% or less.

11. The glass body according to any one of claims 1 to 10,
wherein the antifog means includes an antifog film containing a water absorbent resin.

12. The glass body according to claim 11,
wherein the antifog film has a thickness of 5 µm or more.

13. The glass body according to any one of claims 1 to 12,
wherein visible light transmittance is 20% or more and 70% or less.

14. The glass body according to any one of claims 1 to 13,
wherein, when a reflected color tone on the translucent reflective film side is represented using the L*a*b* color system, a value of a* is -15 to 15, and
when a reflected color tone on the translucent reflective film side is represented using the L*a*b* color system, a value of b* is -15 to 15.

15. The glass body according to any one of claims 1 to 14,
wherein thermal conductivity of the translucent reflective film is larger than that of the glass plate.

16. The glass body according to any one of claims 1 to 15,
wherein the translucent reflective film is formed by layering a plurality of layers, and
at least one of the plurality of layers is a metal reflective layer made of a metal or semimetal.

17. The glass body according to claim 16,
wherein the metal reflective layer contains at least one of Si, Ag, Al, Cr, Ti, and Mo as a main component.

18. The glass body according to claim 16 or 17,
wherein the outermost layer of the translucent reflective film has a refractive index of 1.5 or less for a visible light region.

19. The glass body according to claim 18,
wherein the outermost layer contains SiO₂ as a main component.

20. The glass body according to claim 19,
wherein the antifog means includes an antifog film, and
the antifog film is provided on the translucent reflective film.

21. The glass body according to any one of claims 1 to 20,
wherein the antifog means includes an antifog film, and
the antifog film has a water repellent surface.

22. The glass body according to claim 21,
wherein a water contact angle on the surface of the antifog film is 70° or more.

23. The glass body according to any one of claims 1 to 9,
wherein the antifog means is arranged on the translucent reflective film and the second surface of the glass plate.

24. The glass body according to any one of claims 1 to 23, further comprising
a light-shielding film formed on at least one of the antifog means and the translucent reflective film.
